# EUROPÄISCHE PATENTSCHRIFT

(11) **EP 2 335 867 B1**
(45) Veröffentlichungstag und Bekanntmachung des Hinweises auf die Patenterteilung: **13.02.2013**
(21) Anmeldenummer: 10194803.2
(22) Anmeldetag: 13.12.2010
(51) Int. Cl.: B23Q 11/00, B08B 15/00, B27G 3/00

(54) **Sauggerät sowie Absauganlage**
Suction device and draining device
Appareil d'aspiration et installation d'aspiration

(30) Priorität: 15.12.2009 DE 102009054693
(43) Veröffentlichungstag der Anmeldung: 22.06.2011
(73) Patentinhaber: Alfred Kärcher GmbH & Co. KG, 71364 Winnenden (DE)
(72) Erfinder: Kuolt, Harald, 78586 Deilingen (DE); Gassmann, Jürgen, 71409 Schwaikheim (DE)
(74) Vertreter: Hoeger, Stellrecht & Partner Patentanwälte

(56) Entgegenhaltungen:
- DE-A1- 3 007 345
- DE-U1- 9 012 309
- JP-A- 11 114 764

## Beschreibung

Die Erfindung betrifft ein Sauggerät zum Absaugen eines Bearbeitungsorgans einer Werkzeugmaschine.

Außerdem betrifft die Erfindung eine Absauganlage für mindestens eine Werkzeugmaschine.

Im Anwendungsbereich trennender Werkzeugmaschinen, wie sie beispielsweise in der Holzbearbeitung eingesetzt werden, sind Absauganlagen bekannt mit einem zentralen Saugaggregat, mit dem eine Hauptabsaugleitung mit Unterdruck beaufschlagt wird. An die Hauptabsaugleitung sind über Zweigleitungen Saugköpfe parallel zueinander angeschlossen, mit denen jeweils an Bearbeitungsorganen der Werkzeugmaschinen anfallendes Sauggut abgesaugt werden kann. Um sicherzustellen, dass das Sauggut wirkungsvoll abgesaugt werden kann, ist es erforderlich, das zentrale Saugaggregat mit hoher Saugleistung bereitzustellen. Ferner ist es vonnöten, die Hauptabsaugleitung und die Zweigleitungen mit großen Querschnitten zu versehen, typischerweise mit Durchmessern von 70 cm bzw. 30 cm. Aufgrund der großen Leitungsquerschnitte entstehen trotz leistungsstarkem zentralen Saugaggregat erhebliche Leistungsverluste, wodurch die Strömungsgeschwindigkeit in den Absaugleitungen absinkt. Dies führt zu einer schlechten Erfassung von Sauggut an den Bearbeitungsorganen. Die Werkstücke müssen nachgesäubert werden, was zu erhöhten Betriebs- und Produktionskosten führt. Des Weiteren erweisen sich die vorstehend beschriebenen Absauganlagen aufgrund der groß zu dimensionierenden Absaugleitungen als schlecht handhabbar und als unflexibel, beispielsweise wenn eine Werkzeugmaschine zu versetzen ist.

Um einigen der vorstehend genannten Probleme abzuhelfen, schlägt die DE 40 04 717 A1 vor, dass in die Hauptabsaugleitung zusätzlich mehrere bei Spitzenbedarf zuschaltbare Saugaggregate geschaltet sind und dass in bestimmten Abständen Strahlinjektoren in die Hauptabsaugleitung eingebaut sind, durch die über ein Gebläse Luft mit hoher Geschwindigkeit eingeblasen wird, um die Ablagerung von Spänen in Rohrbereichen mit niedriger Strömungsgeschwindigkeit zu vermeiden.

In der DE 30 07 345 A1 ist ein Sauggerät für eine Werkzeugmaschine gemäß dem Oberbegriff des Anspruchs 1 beschrieben mit einem mit Unterdruck beaufschlagbaren Schmutzsammelbehälter. Am Schmutzsammelbehälter ist eine Zuführleitung für ein Druckmedium angeschlossen, unter dessen Wirkung im Schmutzsammelbehälter abgeschiedenes Sauggut ausgetragen und einer Sammelstelle zugeführt werden kann.

Aufgabe der vorliegenden Erfindung ist es, ein Sauggerät sowie eine Absauganlage bereitzustellen, mit dem bzw. der eine verbesserte Absaugung von Sauggut an einem Bearbeitungsorgan einer Werkzeugmaschine unter geringeren Anforderungen an die Leistung und den Energiebedarf der Absauganlage ermöglicht wird.

Diese Aufgabe wird durch ein erfindungsgemäßes Sauggerät gelöst, das einen ersten Schmutzsammelbehälter umfasst mit einem Saugeinlass für am Bearbeitungsorgan anfallendes Sauggut und mit einer ersten Durchtrittsöffnung für Sauggut, sowie ein Saugaggregat, um den ersten Schmutzsammelbehälter mit Unterdruck zu beaufschlagen, ein erstes Absperrorgan, das von einem Sperrzustand, in dem ein Durchtritt von Sauggut durch die erste Durchtrittsöffnung verhindert wird, in einen Durchlasszustand, in dem Sauggut durch die erste Durchtrittsöffnung hindurch treten kann, und umgekehrt überführbar ist, einen zweiten Schmutzsammelbehälter zur Aufnahme von die erste Durchtrittsöffnung durchtretendem Sauggut mit einem Saugauslass, an den eine Absaugleitung einer Absauganlage anschließbar und über den der zweite Schmutzsammelbehälter mit Unterdruck beaufschlagbar ist, und mit einer zweiten Durchtrittsöffnung für Sauggut sowie ein zweites Absperrorgan, welches von einem Sperrzustand, in dem ein Durchtritt von Sauggut durch die zweite Durchtrittsöffnung verhindert wird, in einen Durchlasszustand, in dem Sauggut durch die zweite Durchtrittsöffnung hindurch treten kann, und umgekehrt überführbar ist.

Das erfindungsgemäße Sauggerät kommt zur Unterstützung der Absauganlage beim Absaugen von am Bearbeitungsorgan anfallenden Sauggut zum Einsatz. Das Sauggerät kann in unmittelbarer Umgebung der Werkzeugmaschine platziert werden. Dies gibt die Möglichkeit, unter Einsatz einer an den Saugeinlass des ersten Schmutzsammelbehälters anschließbaren verhältnismäßig kurzen Saugleitung mit geringem Durchmesser, beispielsweise 10 cm, wirkungsvoll Sauggut am Bearbeitungsorgan zu erfassen und in den ersten Schmutzsammelbehälter einzusaugen. Dieser wird durch das Saugaggregat mit Unterdruck beaufschlagt. Nimmt das erste Absperrorgan den Sperrzustand ein, bei dem ein Hindurchtreten von Sauggut durch die erste Durchtrittsöffnung verhindert wird, kann Sauggut im ersten Schmutzsammelbehälter angesammelt werden. Wird das erste Absperrorgan in den Durchlasszustand überführt, kann das Sauggut durch die erste Durchtrittsöffnung hindurch in den zweiten Schmutzsammelbehälter gelangen und darin angesammelt werden, wenn das zweite Absperrorgan den Sperrzustand einnimmt. Wird das zweite Absperrorgan in den Durchlasszustand überführt, kann aufgrund des vom zentralen Saugaggregat erzeugbaren Unterdruckes das im zweiten Schmutzsammelbehälter angesammelte Sauggut durch die zweite Durchtrittsöffnung hindurch treten und von der Absauganlage abgesaugt werden.

Der zweite Schmutzsammelbehälter dient somit gewissermaßen als Schleuse, über die Sauggut aus dem ersten Schmutzsammelbehälter an die Absaugleitung der Absauganlage übergeben werden kann. Die Übergabe von Sauggut findet am Saugauslass des Sauggerätes statt. Dies erlaubt es, die Absaugleitung kürzer auszubilden als bei einer bekannten Absauganlage. Infolgedessen wird die vom zentralen Saugaggregat der Absauganlage zu bewegende Luftmenge verringert. Das zentrale Saugaggregat kann damit kleiner dimensioniert werden als bei einer herkömmlichen Absauganlage, und die Anforderungen an die Leistung und an den Energiebedarf der Absauganlage werden verringert.

Zum Entleeren des ersten Schmutzsammelbehälters ist es ferner nicht erforderlich, das Sauggerät abzuschalten, da die Übergabe von Sauggut an die Absauganlage im laufenden Betrieb des Sauggerätes erfolgen kann. Insbesondere kann der erste Schmutzsammelbehälter mittels des Saugaggregates kontinuierlich mit Unterdruck beaufschlagt werden, um dauerhaft Sauggut am Bearbeitungsorgan zu erfassen.

Mit dem erfindungsgemäßen Sauggerät lässt sich auch das Versetzen einer Werkzeugmaschine einfacher gestalten als bei den bekannten Absauganlagen. Die Werkzeugmaschine kann zusammen mit dem in seiner unmittelbaren Umgebung platzierbaren Sauggerät neu positioniert werden. Die verhältnismäßig geringe Länge der Saugleitung vom Bearbeitungsorgan zum Saugeinlass kann beibehalten werden, so dass der Erfassungsgrad von Sauggut am Bearbeitungsorgan weiterhin hoch ist.

Günstig ist es, wenn die erste Durchtrittsöffnung eine Eintrittsöffnung für Sauggut in den zweiten Schmutzsammelbehälter bildet, denn dies ermöglicht eine einfache konstruktive Ausgestaltung des Sauggerätes. Die Schmutzsammelbehälter können eine gemeinsame Wand aufweisen, in der die Durchtrittsöffnung gebildet ist.

Bevorzugt ist die zweite Durchtrittsöffnung am Saugauslass angeordnet oder durch diesen ausgebildet. Dies ermöglicht ebenfalls eine einfache konstruktive Ausgestaltung des Sauggerätes. Das zweite Absperrorgan lässt sich konstruktiv einfach am Saugauslass anordnen.

Es kann alternativ vorgesehen sein, dass die zweite Durchtrittsöffnung in Abstand zum Saugauslass angeordnet ist und dass über die zweite Durchtrittsöffnung ein erster Raumbereich des zweiten Schmutzsammelbehälters in einen zweiten Raumbereich des zweiten Schmutzsammelbehälters mündet, wobei Sauggut über die erste Durchtrittsöffnung in den ersten Raumbereich eintreten und über den Saugauslass aus dem zweiten Raumbereich austreten kann.

Durch die erste Durchtrittsöffnung hindurch tretendes Sauggut kann im ersten Raumbereich des zweiten Schmutzsammelbehälters gesammelt werden, wenn das zweite Absperrorgan den Sperrzustand einnimmt. Nach dem Überführen des zweiten Absperrorgans in den Durchlasszustand kann das gesammelte Sauggut von der Absauganlage durch den Saugauslass und die zweite Durchtrittsöffnung hindurch abgesaugt werden.

Von Vorteil ist es, wenn der zweite Schmutzsammelbehälter einen Einlass für Fremdluft umfasst und wenn das Sauggerät ein drittes Absperrorgan aufweist, das von einem Sperrzustand, in dem der Einlass verschlossen ist, in einen Durchlasszustand, in dem die Einlass geöffnet ist, und umgekehrt überführbar ist. Durch den Einlass kann Fremdluft in den zweiten Schmutzsammelbehälter einströmen. Nimmt das zweite Absperrorgan währenddessen den Durchlasszustand ein, kann sich eine Luftströmung durch den zweiten Schmutzsammelbehälter hindurch ausbilden. Dies erleichtert das Absaugen von Sauggut aus dem zweiten Schmutzsammelbehälter.

Alternativ hat es sich als günstig erwiesen, wenn der zweite Schmutzsammelbehälter einen Einlass für Fremdluft umfasst, der mittels des den Sperrzustand einnehmenden zweiten Absperrorgans verschlossen wird und geöffnet ist, wenn das zweite Absperrorgan den Durchlasszustand einnimmt. Dies ermöglicht eine einfachere konstruktive Ausgestaltung des Sauggerätes. Mittels des zweiten Absperrorgans kann dann sowohl ein Durchtritt von Sauggut durch die zweite Durchtrittsöffnung verhindert oder ermöglicht werden als auch ein Einströmen von Fremdluft verhindert oder ermöglicht werden.

Es kann vorgesehen sein, dass durch den Einlass Fremdluft atmosphärischen Drucks in den zweiten Schmutzsammelbehälter eintreten kann. Es ist auch möglich, dass der zweite Schmutzsammelbehälter über den Einlass mit Fremdluft mit Überdruck, d.h. mit einem über dem atmosphärischen Druck liegenden Druck, beaufschlagt wird.

Für einen zuverlässigen Betrieb des Sauggerätes hat es sich als günstig erweisen, wenn mindestens ein Absperrorgan eine Betätigungseinrichtung zum Überführen des Absperrorgans vom Sperrzustand in den Durchlasszustand und/oder umgekehrt aufweist.

Vorteilhafterweise ist mindestens eine Betätigungseinrichtung als pneumatischer Antrieb ausgebildet. Dies hat sich in der Praxis als vorteilhaft für eine zuverlässige Funktion des jeweiligen Absperrorgans herausgestellt. Insbesondere können alle Betätigungseinrichtungen als pneumatische Antriebe ausgebildet sein.

Bei andersartigen Ausführungsformen des erfindungsgemäßen Sauggerätes hat es sich als günstig erwiesen, wenn mindestens eine Betätigungseinrichtung als mechanischer, hydraulischer oder elektrischer Antrieb ausgebildet ist.

Es kann vorgesehen sein, dass mindestens eine Betätigungseinrichtung manuell durch einen Benutzer betätigbar ist.

Bevorzugt ist allerdings mindestens eine Betätigungseinrichtung von einer Steuereinrichtung ansteuerbar. Dies gibt auf einfache Weise die Möglichkeit, den Betrieb des Sauggerätes zu automatisieren und dadurch so anpassungsfähig wie möglich zu gestalten.

Vorteilhafterweise nehmen das erste Absperrorgan und das zweite Absperrorgan einander abwechselnd jeweils den Sperrzustand und den Durchlasszustand ein unter Anwendung von Steuersignalen, die einer ersten Betätigungseinrichtung des ersten Absperrorgans und einer zweiten Betätigungseinrichtung des zweiten Absperrorgans durch die Steuereinrichtung bereitstellbar sind. Dadurch kann auf einfache Weise sichergestellt werden, dass Sauggut zuverlässig zur Übergabe an die Absauganlage durch den zweiten Schmutzsammelbehälter hindurchgeschleust wird. Im ersten Schmutzsammelbehälter angesammeltes Sauggut kann in den zweiten Schmutzsammelbehälter gelangen, wenn das erste Absperrorgan von der Steuereinrichtung dahingehend angesteuert wird, dass es den Durchlasszustand einnimmt. Anschließend kann das zweite Absperrorgan dahingehend angesteuert werden, dass es den Durchlasszustand einnimmt, und das erste Absperrorgan kann dahingehend angesteuert werden, dass es wieder den Sperrzustand einnimmt. Im ersten Schmutzsammelbehälter kann weiterhin Sauggut angesammelt werden, und das Sauggut im zweiten Schmutzsammelbehälter kann der Absauganlage übergeben werden.

Günstig ist es, wenn das erste Absperrorgan und das zweite Absperrorgan nicht gleichzeitig jeweils den Durchlasszustand einnehmen unter Anwendung von Steuersignalen, die der ersten Betätigungseinrichtung des ersten Absperrorgans und der zweiten Betätigungseinrichtung des zweiten Absperrorgans durch die Steuereinrichtung bereitstellbar sind. Dadurch, dass das erste Absperrorgan und das zweite Absperrorgan nicht gleichzeitig den Durchlasszustand einnehmen, kann eine gegenseitige Störung der Saugaggregate des Sauggerätes und der Absauganlage weitgehend vermieden werden. Insbesondere kann ein die Strömungsrichtung im Sauggerät umkehrendes unerwünschtes Druckgefälle zwischen dem Druck im zweiten Schmutzsammelbehälter und dem Druck im ersten Schmutzsammelbehälter weitgehend verhindert werden.

Bevorzugt nehmen das zweite Absperrorgan und das dritte Absperrorgan gleichzeitig jeweils den Durchlasszustand ein unter Anwendung von Steuersignalen, die der zweiten Betätigungseinrichtung des zweiten Absperrorgans und einer dritten Betätigungseinrichtung des dritten Absperrorgans durch die Steuereinrichtung bereitstellbar sind. Dadurch kann auf technisch einfache Weise sichergestellt werden, dass sich im zweiten Schmutzsammelbehälter eine Luftströmung ausbilden kann, um das Absaugen des Saugguts zu erleichtern, wenn das zweite Absperrorgan den Durchlasszustand einnimmt.

Vorteilhafterweise nehmen das erste Absperrorgan und das dritte Absperrorgan nicht gleichzeitig den Durchlasszustand ein unter Anwendung von Steuersignalen, die der ersten Betätigungseinrichtung des ersten Absperrorgans und der dritten Betätigungseinrichtung des dritten Absperrorgans durch die Steuereinrichtung bereitstellbar sind. Dadurch kann vermieden werden, dass in den zweiten Schmutzsammelbehälter einströmende Fremdluft mittels des Saugaggregates durch die erste Durchtrittsöffnung hindurch in den ersten Schmutzsammelbehälter angesaugt wird und so das Absaugen von Sauggut vom Bearbeitungsorgan beeinträchtigt wird.

Bevorzugt ist mindestens ein Absperrorgan zeitgesteuert vom Sperrzustand in den Durchlasszustand und/oder umgekehrt überführbar unter Anwendung eines Steuersignals, das der Betätigungseinrichtung des Absperrorgans durch die Steuereinrichtung bereitstellbar ist. Dadurch kann ein zuverlässigerer Betrieb des Sauggerätes und infolgedessen ein zuverlässigeres Erfassen von Sauggut am Bearbeitungsorgan sichergestellt werden. In gewissen, beispielsweise einstellbaren Intervallen, kann mindestens ein Absperrorgan und bevorzugt alle Absperrorgane von dem Sperrzustand in den Durchlasszustand und/oder umgekehrt überführt werden.

Günstig ist es, wenn mindestens ein Absperrorgan in Abhängigkeit von der Menge an Sauggut in einem Schmutzsammelbehälter vom Sperrzustand in den Durchlasszustand und/oder umgekehrt überführbar ist unter Anwendung eines Steuersignals, das der Betätigungseinrichtung des Absperrorgans durch die Steuereinrichtung bereitstellbar ist. Auf diese Weise kann der Betrieb des Sauggerätes an die Menge an anfallendem Sauggut angepasst werden. Beispielsweise kann das Absperrorgan derart betätigt werden, dass die Menge an Sauggut in einem Schmutzsammelbehälter eine maximale Menge nicht überschreitet. Um die Menge an Sauggut in einem Schmutzsammelbehälter zu erfassen, kann das Sauggerät eine Sensoreinrichtung umfassen.

Vorzugsweise umfasst das Sauggerät die Steuereinrichtung zum Ansteuern mindestens einer Betätigungseinrichtung.

Ergänzend oder alternativ kann vorgesehen sein, dass dem Sauggerät eine Steuereinrichtung zur Ansteuerung mindestens einer Betätigungseinrichtung zugeordnet ist, die das Sauggerät selbst nicht umfasst. Hierbei handelt es sich insbesondere um eine zentrale Steuereinrichtung einer das Sauggerät umfassenden Absauganlage, welche sogar zur Ansteuerung der Betätigungseinrichtungen mehrerer Sauggeräte zum Einsatz kommen kann.

Es kann auch vorgesehen sein, dass das Sauggerät selbst eine Steuereinrichtung umfasst und diese ihrerseits auch noch von einer zentralen Steuereinrichtung der Absauganlage ansteuerbar ist.

Bei einer konstruktiv einfachen Ausgestaltung des Sauggerätes ist mindestens ein Absperrorgan als Schließeinrichtung ausgebildet und umfasst ein Schließelement, mit dem eine Öffnung verschließbar ist. Das Schließelement nimmt in dem Sperrzustand des Absperrorgans eine Schließstellung ein und verschließt die Öffnung. Im Durchlasszustand des Absperrorgans nimmt das Schließelement eine Freigabestellung ein und gibt die Öffnung frei.

Von Vorteil ist es, wenn das Schließelement als Klappe oder als Schieber ausgebildet ist. Dies ermöglicht eine einfache konstruktive Ausgestaltung des Schließelementes und damit des Absperrorganes.

Bei einer besonders günstigen Ausgestaltung des erfindungsgemäßen Sauggerätes hat es sich als vorteilhaft erwiesen, wenn das erste Absperrorgan als Schließeinrichtung mit einem Schließelement in Form einer Klappe ausgebildet ist, und das zweite und das dritte Absperrorgan sind Schließeinrichtungen mit Schließelementen in Form von Schiebern.

Bei einer andersartigen Ausgestaltung eines Absperrorgans in Form einer Schließeinrichtung kann vorgesehen sein, dass das Schließelement als Pfropfen oder Deckel ausgebildet ist, um die Öffnung zu verschließen. Es ist auch möglich, dass das Schließelement als Schlinge ausgebildet ist, die eine flexible Wand eines Schmutzsammelbehälters umschließen und derart zusammenschnüren kann, dass ein Durchtritt von Sauggut durch den Schmutzsammelbehälter verhindert wird. Der von der Schlinge umgriffene Bereich des Schmutzsammelbehälters definiert gewissermaßen eine Durchtrittsöffnung, die mittels des Schließelementes wahlweise freigebbar und verschließbar ist.

Von Vorteil ist es, wenn das erste Absperrorgan und/oder das zweite Absperrorgan als Fördereinrichtung ausgebildet ist und ein Förderelement umfasst, mit dem Sauggut durch die erste Durchtrittsöffnung bzw. die zweite Durchtrittsöffnung hindurch förderbar ist. Die Fördereinrichtung kann stillstehen, so dass das Absperrorgan den Sperrzustand einnimmt und eine Förderung von Sauggut durch die Durchtrittsöffnung hindurch nicht möglich ist. Im Betrieb der Fördereinrichtung kann Sauggut durch die Durchtrittsöffnung hindurch gefördert werden, was einen Durchlasszustand des Absperrorgans definiert.

Es kann vorgesehen sein, dass die Fördereinrichtung beim Betrieb des Sauggerätes kontinuierlich betrieben wird, so dass kontinuierlich Sauggut durch die Durchtrittsöffnung hindurch förderbar ist. In diesem Fall kann das entsprechende Absperrorgan beispielsweise mit der Inbetriebnahme des Sauggerätes vom Sperrzustand in den Durchlasszustand und mit dem Abschalten des Sauggerätes vom Durchlasszustand in den Sperrzustand überführt werden.

Günstig ist es, wenn das Förderelement als Zellenradschleuse oder als Förderschnecke ausgebildet ist. Dies ermöglicht eine einfache konstruktive Ausgestaltung des Förderelementes und damit des Absperrorgans.

Bei einer bestimmten vorteilhaften Ausgestaltung des erfindungsgemäßen Sauggerätes hat es sich als günstig erweisen, wenn das erste Absperrorgan als Fördereinrichtung mit einem Förderelement in Form einer Zellenradschleuse ausgebildet ist, und wenn das zweite und das dritte Absperrorgan Schließeinrichtungen mit Schließelementen in Form von Schiebern sind.

Allgemein ist es günstig, wenn Sauggut unter Schwerkrafteinfluss vom ersten Schmutzsammelbehälter in den zweiten Schmutzsammelbehälter gelangen kann. Dies verleiht dem Sauggerät eine einfachere Konstruktion. Hierfür ist die erste Durchtrittsöffnung zweckmäßigerweise an einer Unterseite des ersten Schmutzsammelbehälters und beispielsweise in einer Bodenwand des ersten Schmutzsammelbehälters gebildet. Der zweite Schmutzsammelbehälter ist unterhalb des ersten Schmutzsammelbehälters angeordnet.

Von Vorteil ist es, wenn das Sauggerät eine erste Geräteeinheit und eine mit dieser lösbar verbindbare zweite Geräteeinheit aufweist, wobei die erste Geräteeinheit zumindest das Saugaggregat und einen den Saugeinlass aufweisenden Abschnitt des ersten Schmutzsammelbehälters aufweist und wobei die zweite Geräteeinheit zumindest den zweiten Schmutzsammelbehälter und das zweite Absperrorgan aufweist. Dies gibt die Möglichkeit, die erste Geräteeinheit von der zweiten Geräteeinheit zu lösen. Die erste Geräteeinheit kann beispielsweise auf eine dritte Geräteeinheit aufgesetzt werden, welche einen herkömmlichen Schmutzsammelbehälter für Sauggut ausbildet. Vom Saugaggregat angesaugtes Sauggut kann in dem Schmutzsammelbehälter des auf diese Weise gebildeten Sauggerätes abgeschieden werden. Dadurch erweist sich das Sauggerät als flexibel, denn über den Einsatz an der Werkzeugmaschine hinaus kann es als herkömmlicher Staubsauger eingesetzt werden. Die dritte Geräteeinheit umfasst hierfür günstigerweise an der Unterseite angeordnete Rollen, so dass das dadurch gebildete Sauggerät auf einer Aufstellfläche verfahren werden kann.

Vorteilhafterweise umfasst die zweite Geräteeinheit zusätzlich das erste Absperrorgan und gegebenenfalls eine die erste Durchtrittsöffnung einfassende Wand des ersten Schmutzsammelbehälters. Die wesentlichen, die "Schleuse" für Sauggut des erfindungsgemäßen Sauggerätes ausmachenden Bauteile werden dadurch in der zweiten Geräteeinheit zusammengefasst.

Wie eingangs erwähnt, betrifft die Erfindung auch eine Absauganlage für mindestens eine Werkzeugmaschine. Die eingangs gestellte Aufgabe wird durch eine erfindungsgemäße Absauganlage gelöst, die mindestens ein Sauggerät der vorstehend beschriebenen Art umfasst sowie ein zentrales Saugaggregat, einen von diesem mit Unterdruck beaufschlagbaren zentralen Schmutzsammelbehälter, der eine Saugöffnung aufweist, sowie mindestens eine Absaugleitung, die an die Saugöffnung und an den Saugauslass des mindestens einen Sauggerätes angeschlossen ist.

Die erfindungsgemäße Absauganlage weist dann die bereits im Zusammenhang mit der Erläuterung des erfindungsgemäßen Sauggerätes beschriebenen Vorteile auf. Auch die mit den vorteilhaften Ausgestaltungen des Sauggerätes erzielbaren Vorteile lassen sich mit der Absauganlage erzielen.

Wie bereits erwähnt, kann die Absauganlage eine zentrale Steuereinrichtung zum Ansteuern einer oder mehrerer Betätigungseinrichtungen eines oder mehrerer Absperrorgane des mindestens einen Sauggerätes umfassen.

Es kann insbesondere vorgesehen sein, dass bei Vorhandensein von zwei oder mehr Sauggeräten die jeweiligen zweiten Betätigungseinrichtungen der zweiten Absperrorgane derart von der zentralen Steuereinrichtung ansteuerbar sind, dass die zweiten Absperrorgane zweier Sauggeräte nicht gleichzeitig den Durchlasszustand einnehmen. Dadurch wird ermöglicht, dass zu einem gewissen Zeitpunkt nur Sauggut eines Sauggerätes von der Absauganlage abgesaugt wird. Dieses Sauggut lässt sich dann besonders wirkungsvoll von der Absauganlage absaugen.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine bevorzugte Ausführungsform einer erfindungsgemäßen Absauganlage mit zwei Exemplaren einer ersten bevorzugten Ausführungsform eines erfindungsgemäßen Sauggerätes zum Absaugen von zwei Werkzeugmaschinen;
- Figur 2:: eine vergrößerte Darstellung von Detail A in Figur 1, die ein Sauggerät zu einem ersten Zeitpunkt schematisch darstellt;
- Figur 3:: das Sauggerät aus Figur 2 zu einem zweiten, späteren Zeitpunkt;
- Figur 4:: das Sauggerät aus Figur 2 zu einem dritten, noch späteren Zeitpunkt;
- Figur 5:: das Sauggerät aus Figur 2 zu einem vierten, noch späteren Zeitpunkt;
- Figur 6:: eine schematische Darstellung einer zweiten bevorzugten Ausführungsform eines erfindungsgemäßen Sauggerätes;
- Figur 7:: eine schematische Darstellung einer dritten bevorzugten Ausführungsform eines erfindungsgemäßen Sauggerätes;
- Figur 8:: eine schematische Darstellung einer vierten bevorzugten Ausführungsform eines erfindungsgemäßen Sauggerätes;
- Figur 9:: eine schematische Darstellung einer fünften bevorzugten Ausführungsform eines erfindungsgemäßen Sauggerätes;
- Figur 10:: eine schematische Darstellung einer sechsten bevorzugten Ausführungsform eines erfindungsgemäßen Sauggerätes;
- Figur 11:: eine schematische Darstellung einer siebten bevorzugten Ausführungsform eines erfindungsgemäßen Sauggerätes mit einer ersten Geräteeinheit und einer mit dieser lösbar verbundenen zweiten Geräteeinheit und
- Figur 12:: das Sauggerät aus Figur 11, wobei die erste Geräteeinheit von der zweiten Geräteeinheit gelöst und mit einer dritten Geräteeinheit verbunden ist.

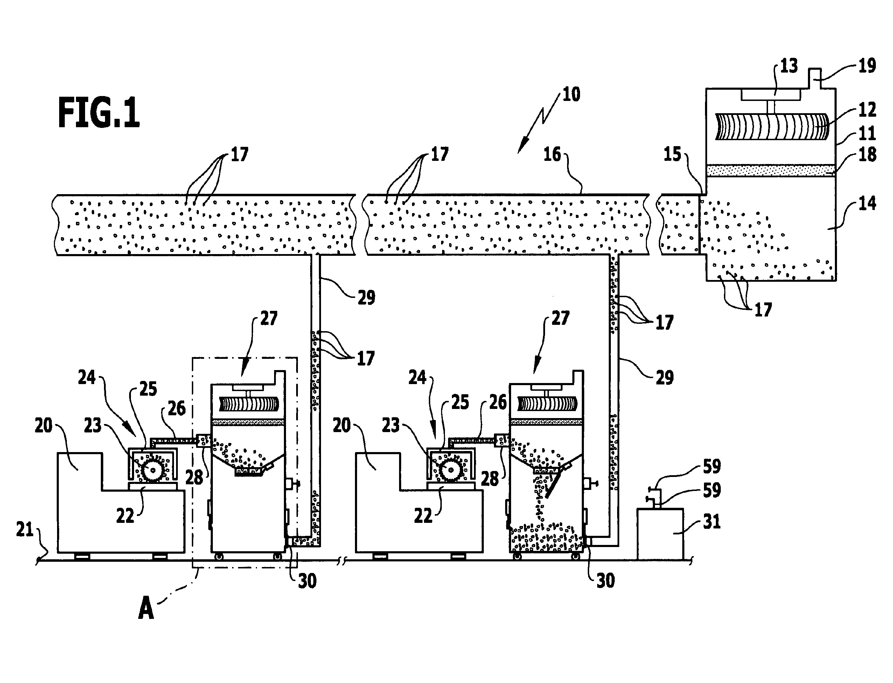

Eine bevorzugte Ausführungsform einer erfindungsgemäßen Absauganlage ist in Figur 1 schematisch dargestellt und insgesamt mit dem Bezugszeichen 10 belegt. Die Absauganlage 10 umfasst ein Gehäuse 11, welches ein zentrales Saugaggregat 12 aufnimmt, das mittels eines Antriebes 13 drehend antreibbar ist. Mittels des zentralen Saugaggregates 12 kann in einem vom Gehäuse 11 ausgebildeten zentralen Schmutzsammelbehälter 14 ein Unterdruck erzeugt werden, so dass über eine an einer Saugöffnung 15 des Schmutzsammelbehälters 14 angeschlossene Saugleitung 16 Sauggut 17 angesaugt und im zentralen Schmutzsammelbehälter 14 abgeschieden werden kann.

Dem zentralen Saugaggregat 12 ist ein Filter 18 vorgelagert, das von Saugluft durchquert werden kann. Durch einen Auslass 19 kann die Saugluft das Gehäuse 11 verlassen.

Die Absauganlage 10 kommt zum Absaugen von an Werkzeugmaschinen anfallendem Sauggut 17 zum Einsatz, von denen vorliegend zwei Werkzeugmaschinen 20 auf einem Boden 21 stehend dargestellt sind. Mittels der Werkzeugmaschinen 20 ist jeweils ein Werkstück 22 durch Einsatz eines Bearbeitungsorgans 23 bearbeitbar. Bei den Werkzeugmaschinen 20 kann es sich z.B. um trennende Werkzeugmaschinen handeln, insbesondere um Holzbearbeitungsmaschinen. Dementsprechend handelt es sich bei dem Werkstück 22 beispielsweise um ein Stück Holz und bei dem Bearbeitungsorgan 23 um ein Holzbearbeitungsorgan, beispielsweise ein Sägaggregat. Mithin handelt es sich bei dem beim Bearbeiten des Werkstücks 22 anfallenden Sauggut 17 um Holzspäne oder Holzstaub.

Die Absauganlage 10 umfasst zum Absaugen des jeweils an einem Bearbeitungsorgan 23 anfallenden Sauggutes 17 jeweils einen Saugkopf 24 mit einer das Bearbeitungsorgan 23 und das Werkstück 22 übergreifenden Haube 25. An die Haube 25 schließt sich eine kurze Absaugleitung 26 an. Die Absaugleitung 26 ist mit ihrem der Haube 25 abgewandten Ende eingangsseitig an eine erste bevorzugte Ausführungsform eines erfindungsgemäßen und unmittelbar neben der Werkzeugmaschine 20 positionierten Sauggerätes 27 angeschlossen, und zwar an dessen Saugeinlass 28. Die Absauganlage 10 umfasst zwei identisch ausgebildete Sauggeräte 27.

Ausgangsseitig am Sauggerät 27 ist eine Absaugleitung 29 an dessen Saugauslass 30 angeschlossen, welche mit ihrem dem Saugauslass 30 abgewandten Ende an die Saugleitung 16 angeschlossen ist. Auf diese Weise kann am Bearbeitungsorgan 23 anfallendes Sauggut 17 durch die Absaugleitung 26, das Sauggerät 27, die Absaugleitung 29 sowie die Saugleitung 16 hindurch abgesaugt und im zentralen Schmutzsammelbehälter 14 abgeschieden werden.

Ferner umfasst die Absauganlage 10 eine schematisch dargestellte Steuereinrichtung 31, deren Funktionsweise nachfolgend noch erläutert wird.

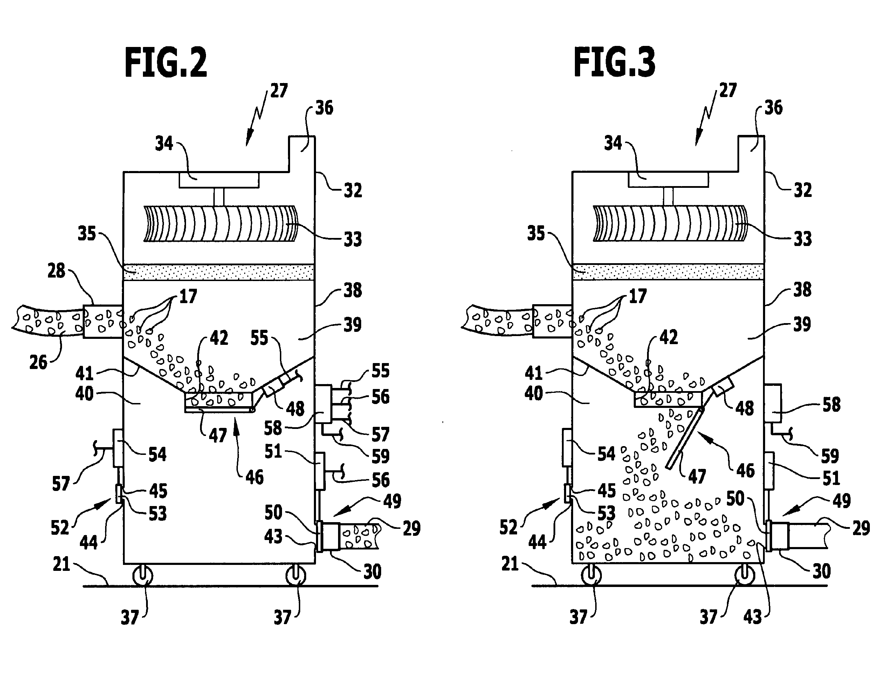

Wie insbesondere aus den Figuren 2 bis 5 hervorgeht, umfasst das Sauggerät 27 ein Gehäuse 32, das ein Saugaggregat 33 aufnimmt, welches von einem Antrieb 34 drehend antreibbar ist. Unterhalb des Saugaggregates 33 ist ein Filter 35 für vom Saugaggregat 33 angesaugte Saugluft gehalten, und die Saugluft kann das Gehäuse 32 über einen Auslass 36 verlassen.

An seiner Unterseite trägt das Gehäuse 32 eine Mehrzahl von Rollen 37, so dass das Sauggerät 27 auf dem Boden 21 benutzerfreundlich verfahren und je nach Bedarf relativ zur Werkzeugmaschine 20 positioniert werden kann.

Unterhalb des Filters 35 bildet das Gehäuse 32 einen zweigeteilten Behälter 38, nämlich mit einem ersten Schmutzsammelbehälter 39 und einem unterhalb von diesem angeordneten zweiten Schmutzsammelbehälter 40. Die Schmutzsammelbehälter 39 und 40 teilen sich eine gemeinsame Wand 41, die eine trichterförmige Bodenwand des ersten Schmutzsammelbehälters 39 bildet und in der eine erste Durchtrittsöffnung 42 für Sauggut 17 gebildet ist. Der erste Schmutzsammelbehälter 39 weist den Saugeinlass 28 auf, und der zweite Schmutzsammelbehälter 41 weist den Saugauslass 30 auf. Der Saugauslass 30 bildet eine zweite Durchtrittsöffnung 43 für Sauggut 17.

Ferner weist der zweite Schmutzsammelbehälter 40 einen Fremdlufteinlass 44 mit einer Einströmöffnung 45 für Umgebungsluft auf.

An der ersten Durchtrittsöffnung 42 ist ein erstes Absperrorgan 46 angeordnet, welches in Form einer Schließeinrichtung mit einem Schließelement in Gestalt einer Klappe 47 ausgebildet ist. Mittels der Klappe 47 kann die erste Durchtrittsöffnung 42 wahlweise verschlossen und freigegeben werden, dies definiert eine Schließstellung bzw. eine Freigabestellung der Klappe 47. Nimmt die Klappe 47 ihre Schließstellung ein, kann kein Sauggut 17 durch die erste Durchtrittsöffnung 42 hindurch treten. Dies wird als Sperrzustand des Absperrorgans 46 bezeichnet. Nimmt hingegen die Klappe 47 ihre Freigabestellung ein, kann Sauggut 17 aus dem ersten Schmutzsammelbehälter 39 in den zweiten Schmutzsammelbehälter 40 gelangen, indem es durch die erste Durchtrittsöffnung 42 hindurch tritt. Dies definiert einen Durchlasszustand des ersten Absperrorgans 46. In den Figuren 2, 4 und 5 nimmt die Klappe 47 ihre Schließstellung ein, und in Figur 3 nimmt die Klappe 47 ihre Freigabestellung ein.

Ferner umfasst das erste Absperrorgan 46 eine Betätigungseinrichtung in Form eines insbesondere pneumatischen Antriebs 48 für die Klappe 47. Anstelle des pneumatischen Antriebs 48 könnte auch ein mechanischer, ein elektrischer, ein hydraulischer oder ein sonstwie gearteter Antrieb zum Einsatz kommen.

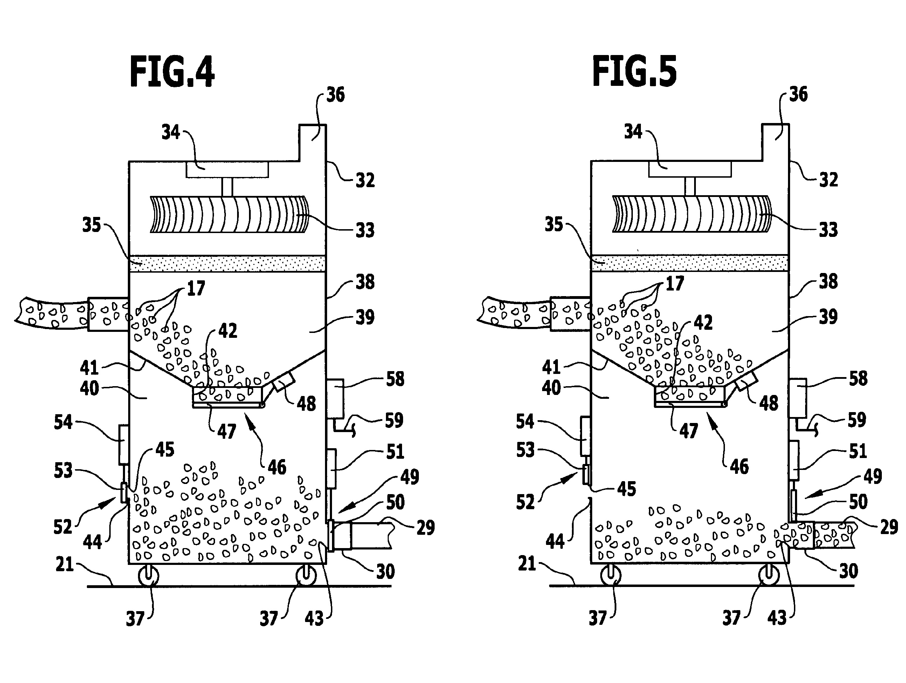

Am Saugauslass 30 ist ein zweites Absperrorgan 49 angeordnet, das ebenfalls in Form einer Schließeinrichtung mit einem Schließelement in Gestalt eines Schiebers 50 ausgebildet ist. Mittels des Schiebers 50 ist die zweite Durchtrittsöffnung 43 wahlweise freigebbar und verschließbar. Nimmt der Schieber 50 seine Schließstellung ein, kann kein Sauggut 17 durch die zweite Durchtrittsöffnung 43 hindurch treten (Figuren 2 bis 4). Dies definiert einen Sperrzustand des Absperrorgans 49. Nimmt der Schieber 50 hingegen seine Freigabestellung ein, kann Sauggut 17 durch die zweite Durchtrittsöffnung 43 hindurch treten (Figur 5). Dies definiert einen Durchlasszustand des Absperrorgans 49.

Zur Betätigung des Schiebers 50 umfasst das Absperrorgan 49 einen ebenfalls als insbesondere pneumatischen Antrieb ausgestalteten Antrieb 51.

In entsprechender Weise ist am Fremdlufteinlass 44 ein drittes Absperrorgan 52 angeordnet, das in Form einer Schließeinrichtung mit einem Schließelement in Gestalt eines Schiebers 53 ausgebildet ist. Mittels des Schiebers 53 kann die Einströmöffnung 45 verschlossen werden (Figuren 2 bis 4), dies definiert eine Schließstellung des Schiebers 53 und einen Sperrzustand des dritten Absperrorgans 52. Ist die Einströmöffnung 45 freigegeben (Figur 5), kann Fremdluft durch die Einströmöffnung 45 in den zweiten Schmutzsammelbehälter 40 einströmen. Dies definiert eine Freigabestellung des Schiebers 53 und einen Durchlasszustand des dritten Absperrorgans 52.

Zum Betätigen des Schiebers 53 umfasst das dritte Absperrorgan 52 einen ebenfalls als insbesondere pneumatischen Antrieb ausgestalteten Antrieb 54.

Die Antriebe 48, 51 und 54 stehen über Steuerleitungen 55, 56 bzw. 57 mit einer Steuereinrichtung 58 des Sauggerätes 27 in Wirkverbindung. Die Steuerleitungen 55 bis 57 sind aus Gründen der Übersichtlichkeit nur in Figur 2 und dort nur ansatzweise dargestellt. Die Steuereinrichtung 58 ist von der Steuereinrichtung 31 der Absauganlage 10 über eine ansatzweise dargestellte Steuerleitung 59 ansteuerbar.

Mittels der Steuereinrichtung 58 sind die Antriebe 48, 51 und 54 auf nachfolgend beschriebene Weise ansteuerbar, so dass Sauggut 17 vom Bearbeitungsorgan 23 mittels des Sauggerätes 27 und der Absauganlage 10 insgesamt abgesaugt werden kann.

Das Saugaggregat 33 des Sauggerätes 27 ist vorzugsweise kontinuierlich in Betrieb, um den ersten Schmutzsammelbehälter 39 kontinuierlich mit Unterdruck zu beaufschlagen. Da das Sauggerät 27 unmittelbar neben der Werkzeugmaschine 20 angeordnet ist, kann über die Absaugleitung 26 beim Bearbeitungsorgan 23 angefallenes Sauggut 17 wirkungsvoll mit hoher Strömungsgeschwindigkeit erfasst und in den ersten Schmutzsammelbehälter 39 eingesaugt werden. Zu einem ersten Zeitpunkt (Figur 2) nehmen die Klappe 47 sowie die Schieber 50 und 53 jeweils ihre Schließstellung ein.

Zu einem späteren Zeitpunkt (Figur 3) kann die Steuereinrichtung 58 den Antrieb 48 dahingehend ansteuern, die Klappe 47 in die Freigabestellung zu überführen. Dadurch kann Sauggut 17 vom ersten Schmutzsammelbehälter 39 in den zweiten Schmutzsammelbehälter 40 durch die erste Durchtrittsöffnung 42 hindurch unter Schwerkrafteinfluss hinein fallen. Weil die Klappe 47 nur sauggutdicht ausgestaltet ist, nicht aber druckdicht, herrscht beim Öffnen der Klappe 47 im Behälter 38 insgesamt derselbe Druck, was das Öffnen der Klappe 47 erleichtert.

Anschließend kann die Steuereinrichtung 58 den Antrieb 48 dahingehend ansteuern, die Klappe 47 wieder in die Schließstellung zu überführen (Figur 4). Eine gewisse Menge an Sauggut 17 ist, während die Klappe 47 die Freigabestellung eingenommen hat, in den zweiten Schmutzsammelbehälter 40 hinein gefallen und verweilt dort gewissermaßen wie in einer Schleuse.

Anschließend kann die Steuereinrichtung 58 die Antriebe 51 und 54 derart ansteuern, dass die Schieber 50 und 53 jeweils in ihre Freigabestellung überführt werden (Figur 5). Dies ermöglicht es, mittels des zentralen Saugaggregates 12 der Absauganlage 10 Sauggut 17 aus dem zweiten Schmutzsammelbehälter 40 abzusaugen und im zentralen Schmutzsammelbehälter 14 abzuscheiden. Und zwar wird Sauggut 17 durch die zweite Durchtrittsöffnung 43 und den Saugauslass 30 hindurch, und weiter durch die Absaugleitung 29, die Saugleitung 16 und die Saugöffnung 15 hindurch in den zentralen Schmutzsammelbehälter 14 eingesaugt.

Währenddessen wird der Schmutzsammelbehälter 40 mit durch die Einströmöffnung 45 einströmender Fremdluft beaufschlagt. Es entsteht dadurch im Schmutzsammelbehälter 40 eine Luftströmung, so dass das Sauggut 17 durch das zentrale Saugaggregat 12 wirkungsvoll abgesaugt werden kann.

Zu diesem Zeitpunkt ist die erste Durchtrittsöffnung 42 mit der Klappe 47 verschlossen. Dadurch wird gewährleistet, dass kein Sauggut 17 vom zweiten Schmutzsammelbehälter 40 zurück in den ersten Schmutzsammelbehälter 39 mittels des Saugaggregates 33 angesaugt wird.

Anschließend können die Antriebe 51 und 54 von der Steuereinrichtung 58 wieder dahingehend angesteuert werden, dass die Schieber 50 und 53 ihre Schließstellungen einnehmen (Figur 2), und der vorstehend beschriebene Zyklus kann erneut beginnen.

Die Zeitpunkte, zu denen mittels der Steuereinrichtung 58 die Antriebe 48, 51 und 54 zur Betätigung der Klappe 47 bzw. der Schieber 50 und 53 betätigt werden, können beispielsweise voreingestellt und/oder einstellbar sein. Eine Einstellung dieser Zeitpunkte sowie der Zeitdauer, während der die Klappe 47 und die Schieber 50 und 53 geöffnet sind, kann beispielsweise durch ein Servicepersonal für das Sauggerät 27 vorgenommen werden.

Es ist allerdings auch möglich, dass mittels der Steuereinrichtung 58 die Antriebe 48, 51 und 54 bedarfsabhängig angesteuert werden, und zwar in Abhängigkeit von der Menge an Sauggut 17 im ersten Schmutzsammelbehälter 39 und/oder im zweiten Schmutzsammelbehälter 40. Hierfür kann das Sauggerät 27 eine entsprechende Sensoreinrichtung aufweisen, um die Menge an Sauggut 17 zu erfassen.

Des Weiteren ist es möglich, dass die Steuereinrichtung 58 über die Steuerleitung 59 von der Steuereinrichtung 31 der Absauganlage 10 angesteuert wird. Die Steuereinrichtung 31 kann der Steuereinrichtung 58 Öffnungs- und Schließzeitpunkt sowie Dauer der Schließstellungen und der Freigabestellungen der Klappe 47 und der Schieber 50 und 53 vorgeben. Umfasst die Absauganlage 10 mehr als nur ein Sauggerät 27, ist es insbesondere möglich, dass die Sauggeräte 27 nacheinander mittels des zentralen Saugaggregates 12 abgesaugt werden, d.h. die jeweiligen Schieber 50 der Sauggeräte 27 werden so zeitversetzt betätigt, dass das zentrale Saugaggregat 12 Sauggut 17 nur aus jeweils einem der zweiten Schmutzsammelbehälter 40 absaugt (Figur 1).

Mittels des erfindungsgemäßen Sauggerätes 27 kann, wie bereits erwähnt, Sauggut 17 an der Werkzeugmaschine 20 wirkungsvoll erfasst werden und über den eine Schleuse ausbildenden zweiten Schmutzsammelbehälter 40 an die weiteren Komponenten der Absauganlage 10 übergeben werden. Dadurch ist die Möglichkeit gegeben, die Absauganlage 10 mit einer kleineren Leistung und mit kleinerem Energiebedarf zu betreiben, als dies bei den aus dem Stand der Technik bekannten Absauganlagen der Fall ist. Die Leistung des zentralen Saugaggregates 12 kann vermindert und die Länge sowie der Durchmesser der Saugleitung 16 sowie der Absaugleitung 29 können gegenüber herkömmlichen Absauganlagen verringert werden.

Nachfolgend werden weitere bevorzugte Ausführungsformen eines erfindungsgemäßen Sauggerätes erläutert. Merkmale oder Bauteile dieser Sauggeräte, die gleich oder gleichwirkend zu Merkmalen oder Bauteilen des Sauggerätes 27 ausgebildet sind, werden mit denselben Bezugszeichen belegt. Die mit dem Sauggerät 27 erzielbaren Vorteile können mit den nachfolgend erläuterten Sauggeräten ebenfalls erzielt werden. Die Sauggeräte können bei der Absauganlage 10 anstelle des Sauggerätes 27 zum Einsatz kommen.

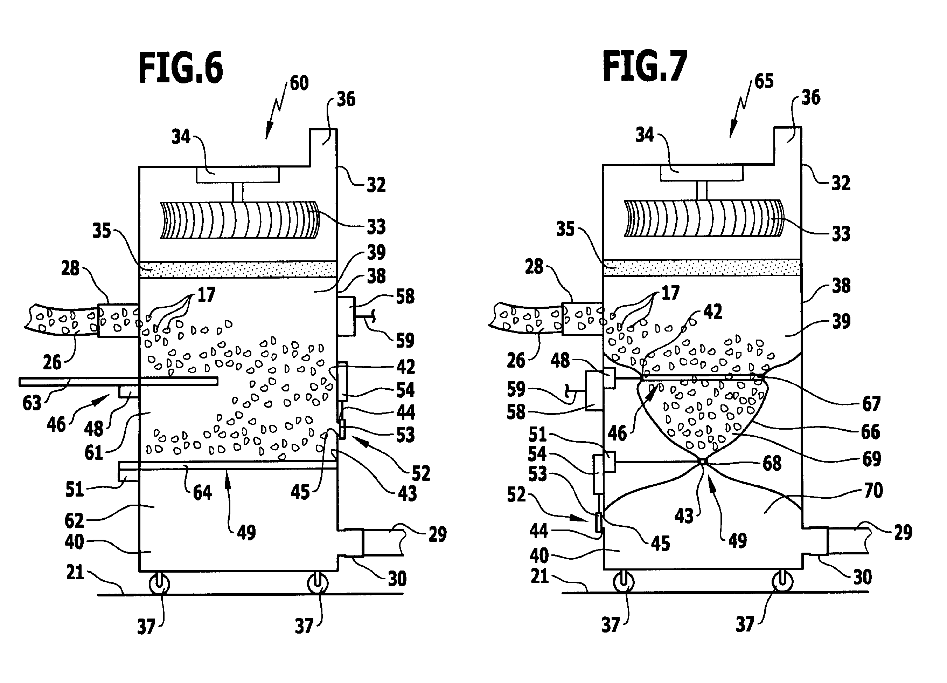

Eine zweite bevorzugte Ausführungsform eines erfindungsgemäßen Sauggerätes ist in Figur 6 schematisch dargestellt und dort mit dem Bezugszeichen 60 belegt. Bei dem Sauggerät 60 weist der erste Schmutzsammelbehälter 39 keine die Durchtrittsöffnung 42 bildende Wand 41 auf, sondern die erste Durchtrittsöffnung 42 ist über die gesamte Querschnittsfläche des Behälters 38 gebildet. Die zweite Durchtrittsöffnung 43 ist ebenfalls über die gesamte Querschnittsfläche des Behälters 38 gebildet. Ferner ist der zweite Schmutzsammelbehälter 40 in einen ersten Raumbereich 61 unterhalb des ersten Schmutzsammelbehälters 39 sowie einen zweiten Raumbereich 62 unterhalb des ersten Raumbereiches 61 unterteilt, die ineinander über die zweite Durchtrittsöffnung 43 münden.

Das erste Absperrorgan 46 umfasst als Schließelement einen relativ zum Behälter 38 horizontal verschieblichen Schieber 63 zum Verschließen der ersten Durchtrittsöffnung 42. In gleicher Weise umfasst das zweite Absperrorgan 49 einen relativ zum Behälter 38 horizontal verschieblichen Schieber 64 zum Verschließen der zweiten Durchtrittsöffnung 43. Am Saugauslass 30 selbst ist kein Absperrorgan angeordnet. Der Fremdlufteinlass 44 und das dritte Absperrorgan 52 sind so am Behälter 38 angeordnet, dass die Einströmöffnung 45 im Bereich des ersten Raumbereiches 61 angeordnet ist.

Durch die erste Durchtrittsöffnung 42 hindurch tretendes Sauggut 17 sammelt sich im ersten Raumbereich 61. Wird der Schieber 64 von seiner Schließstellung in seine Freigabestellung überführt, kann das Sauggut 17 aus dem ersten Raumbereich 61 durch den zweiten Raumbereich 62 hindurch mittels des zentralen Saugaggregates 12 abgesaugt werden.

Im Übrigen funktioniert das Sauggerät 60 in entsprechender Weise wie das Sauggerät 27, so dass auf die vorstehende Erläuterung verwiesen werden kann. Figur 6 zeigt das Sauggerät in einer der Figur 3 entsprechenden Darstellung, bei der der Schieber 63 eine Freigabestellung einnimmt und die erste Durchtrittsöffnung 42 teilweise freigegeben ist.

Eine dritte bevorzugte Ausführungsform eines erfindungsgemäßen Sauggerätes ist in Figur 7 schematisch dargestellt und dort insgesamt mit dem Bezugszeichen 65 belegt. Bei dem Sauggerät 65 ist der Behälter 38 mit einem flexiblen schlauchartigen Gebilde, nachfolgend als Schlauch 66 bezeichnet, ausgekleidet. Der Schlauch 66 wird unterhalb des Saugeinlasses 28 von einem Schließelement des ersten Absperrorgans 46 in Form einer Schlinge 67, beispielsweise aus Draht, umgriffen. In entsprechender Weise wird der Schlauch 66 zwischen der Schlinge 67 und dem Saugauslass 30 von einem Schließelement des zweiten Absperrorgans 49 in Form einer weiteren, gleichartigen Schlinge 68 umgriffen. Er bildet jeweils abschnittsweise eine Wand der Schmutzsammelbehälter 39 und 40.

Der von den Schlingen 67 und 68 eingefasste Querschnitt des Schlauches 66 definiert die erste Durchtrittsöffnung 42 bzw. die zweite Durchtrittsöffnung 43. Dementsprechend ist der zweite Schmutzsammelbehälter 40 unterteilt in einen ersten Raumbereich 69 zwischen den Schlingen 67 und 68 und in einen zweiten Raumbereich 70 unterhalb der Schlinge 68.

Mittels der Schlingen 67 und 68 kann der Schlauch 66 so weit zusammengezogen werden, dass die erste Durchtrittsöffnung 42 bzw. die zweite Durchtrittsöffnung 43 ganz verschwinden, d.h. geschlossen sind. Umgekehrt können die Schlinge 67 und die Schlinge 68 gelockert werden, so dass sich der flexible Schlauch 66 aufweitet und die erste Durchtrittsöffnung 42 bzw. die zweite Durchtrittsöffnung 43 vorhanden sind, d.h. mittels der Schlingen 67 bzw. 68 freigegeben sind. Die Antriebe 48 und 51 für die Schlingen 67 bzw. 68 sind vorzugsweise mechanische Antriebe.

Figur 7 zeigt das Sauggerät 65 in einer der Figur 3 entsprechenden Darstellung, bei der die erste Durchtrittsöffnung 42 mittels der Schlinge 67 freigegeben und die zweite Durchtrittsöffnung 43 mittels der Schlinge 68 verschlossen ist. Im Übrigen funktioniert das Sauggerät 65 entsprechend wie das Sauggerät 60 und damit weitgehend wie das Sauggerät 27, so dass auf vorstehende Erläuterungen verwiesen werden kann.

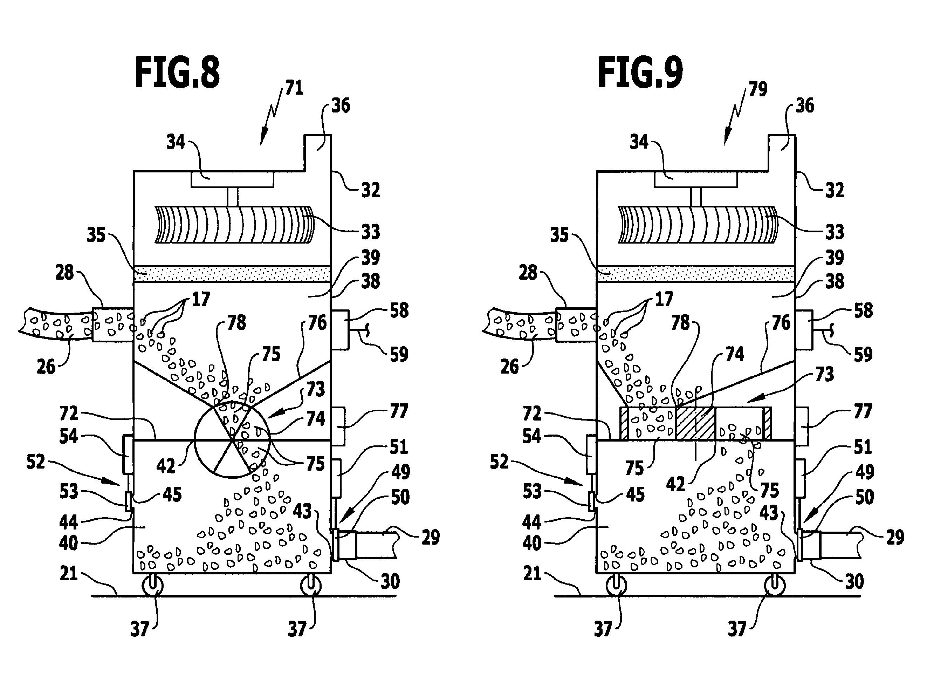

Eine vierte bevorzugte Ausführungsform eines erfindungsgemäßen Sauggerätes ist in Figur 8 schematisch dargestellt und dort insgesamt mit dem Bezugszeichen 71 belegt. Bei dem Sauggerät 71 sind die Schmutzsammelbehälter 39 und 40 durch eine horizontale Wand 72, die die erste Durchtrittsöffnung 42 ausbildet, voneinander getrennt. Anstelle des ersten Absperrorgans 46 kommt ein Absperrorgan 73 zum Einsatz, das als Fördereinrichtung mit einem Förderelement in Gestalt einer Zellenradschleuse 74 ausgebildet ist. Die Zellenradschleuse 74 ist um eine horizontale und in einer durch die Wand 72 definierten Ebene liegende Achse drehbar und umfasst eine Mehrzahl von Zellen 75.

Oberhalb der Wand 72 ist eine trichterförmige Wand 76 im ersten Schmutzsammelbehälter 39 angeordnet, mit der Sauggut 17 in eine der Zellen 75 geleitet werden kann. Die Zellenradschleuse 74 ist mittels eines Antriebs 77, vorliegend eines mechanischen Antriebs, betätigbar. Dieser Antrieb 77 ist entsprechend wie der Antrieb 48 von der Steuereinrichtung 58 ansteuerbar.

Mittels der Zellenradschleuse 74 kann Sauggut 17 aus dem ersten Schmutzsammelbehälter 39 in den zweiten Schmutzsammelbehälter 40 befördert werden. Dies geschieht dadurch, dass Sauggut 17 durch eine in der Wand 76 gebildete Öffnung 78 hindurch tritt und in eine der Zellen 75 eintritt und dass bei darauf folgender Rotation der Zellenradschleuse 74 die mit Sauggut 17 gefüllte Zelle 75 in den zweiten Schmutzsammelbehälter 40 unter Schwerkrafteinfluss entleert wird.

Rotiert die Zellenradschleuse 74 nicht, definiert dies einen Sperrzustand des ersten Absperrorgans 73. Dabei kann kein Sauggut 17 durch die Durchtrittsöffnung 42 hindurch treten. Rotiert die Zellenradschleuse 74 hingegen, kann Sauggut 17 durch die erste Durchtrittsöffnung 42 hindurch treten, und dies definiert einen Durchlasszustand des ersten Absperrorgans 73.

Es kann vorgesehen sein, dass die Zellenradschleuse 74 beim Betrieb des Sauggerätes 71 dauerhaft rotiert, d.h. dauerhaft den Durchlasszustand einnimmt. Dementsprechend wird dauerhaft Sauggut 17 vom ersten Schmutzsammelbehälter 39 in den zweiten Schmutzsammelbehälter 40 befördert. In diesem Fall wird das erste Absperrorgan 73 beispielsweise nur bei der Inbetriebnahme des Sauggerätes 71 von dem Sperrzustand in den Durchlasszustand überführt und beim Stilllegen des Sauggerätes 71 vom Durchlasszustand in einen Sperrzustand überführt.

Es ist auch möglich, dass die Zellenradschleuse 74 nur vorübergehend rotiert und den Inhalt an Sauggut 17 einer vorgebbaren Zahl an Zellen 75 in den zweiten Schmutzsammelbehälter 40 befördert, bevor diese Menge an Sauggut 17 anschließend aus dem zweiten Schmutzsammelbehälter 40 abgesaugt wird.

Im Übrigen funktioniert das Sauggerät 71 in entsprechender Weise wie das Sauggerät 27, so dass auf die vorstehenden Erläuterungen verwiesen werden kann.

Eine fünfte bevorzugte Ausführungsform eines erfindungsgemäßen Sauggerätes ist in Figur 9 schematisch dargestellt und dort insgesamt mit dem Bezugszeichen 79 belegt. Das Sauggerät 79 ist weitgehend identisch zum Sauggerät 71 ausgebildet und umfasst ebenso wie dieses das erste Absperrorgan 73, welches als Fördereinrichtung mit dem Förderelement in Form der Zellenradschleuse 74 ausgebildet ist. Im Gegensatz zum Sauggerät 71 ist die Zellenradschleuse 74 beim Sauggerät 79 um eine vertikale und senkrecht zu einer von der Wand 72 definierten Ebene ausgerichteten Achse drehbar.

Auch beim Sauggerät 79 kann die Zellenradschleuse 74 kontinuierlich gedreht werden. Es ist auch möglich, dass die Zellenradschleuse 74 nur vorübergehend gedreht wird, wobei zwischen aufeinander folgenden Drehungen der Zellenradschleuse 74 jeweils im zweiten Schmutzsammelbehälter 40 gesammeltes Sauggut 70 abgesaugt werden kann.

Im Übrigen funktioniert das Sauggerät 79 in entsprechender Weise wie das Sauggerät 71, so dass auf die vorstehende Erläuterung und damit auch auf die Erläuterung betreffend das Sauggerät 27 verwiesen werden kann.

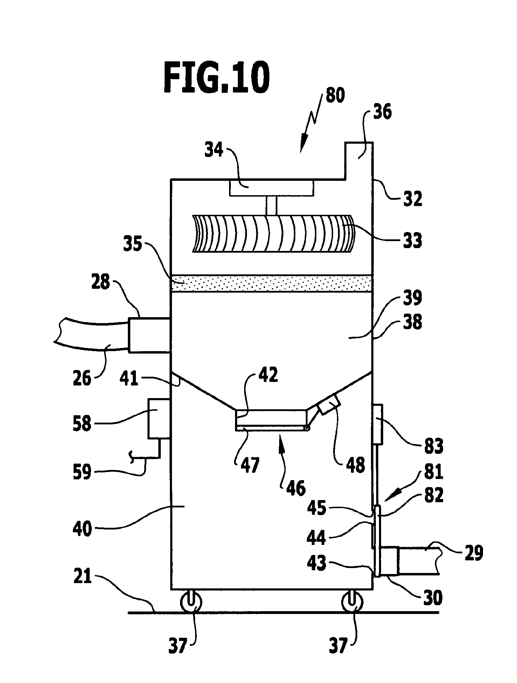

In Figur 10 ist eine sechste bevorzugte Ausführungsform eines erfindungsgemäßen Sauggerätes schematisch dargestellt und dort insgesamt mit dem Bezugszeichen 80 belegt. Bei dem Sauggerät 80 handelt es sich um eine Variante des Sauggerätes 27, bei dem anstelle der Absperrorgane 49 und 52 ein deren Funktion vereinendes gemeinsames Absperrorgan 81 zum Einsatz kommt.

Das Absperrorgan 81 ist dementsprechend in Form einer Schließeinrichtung mit einem Schließelement in Gestalt eines Schiebers 82 ausgebildet. Der Schieber 82 ist mittels eines Antriebes und insbesondere pneumatischen Antriebes 83 betätigbar.

In einer Schließstellung verschließt der Schieber 82 die Einströmöffnung 45 und die zweite Durchtrittsöffnung 43, und in einer Freigabestellung (nicht gezeigt) gibt der Schieber 82 die Einströmöffnung 45 und die zweite Durchtrittsöffnung 43 frei. Der Antrieb 83 ist in entsprechender Weise wie der Antrieb 51 von der Steuereinrichtung 58 ansteuerbar.

Im Übrigen funktioniert das Sauggerät 80 in entsprechender Weise wie das Sauggerät 27, so dass auf vorstehende Erläuterungen verwiesen werden kann.

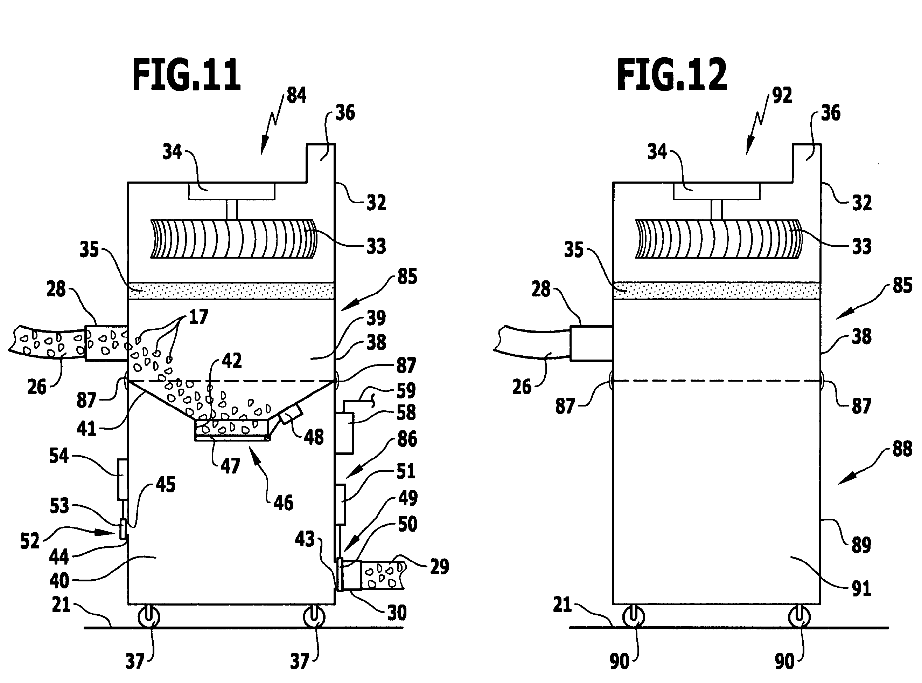

Eine siebte bevorzugte Ausführungsform eines erfindungsgemäßen Sauggerätes ist in Figur 11 schematisch dargestellt und dort insgesamt mit dem Bezugszeichen 84 belegt. Das Sauggerät 84 ist weitgehend identisch ausgebildet zum Sauggerät 27. Von diesem unterscheidet es sich dadurch, dass es in eine erste Geräteeinheit 85 sowie eine zweite Geräteeinheit 86 unterteilt ist, die lösbar miteinander verbindbar sind und mittels geeigneter Verbindungselemente 87 druckdicht miteinander verbunden werden können. Die zweite Geräteeinheit 86 umfasst denjenigen Bereich des Sauggerätes 84, soweit er sich unterhalb des Ansatzes der trichterförmigen Wand 41 am Gehäuse 32 befindet, d.h. auch einen unterhalb des Saugeinlasses 28 angeordneten Abschnitt des ersten Schmutzsammelbehälters 39.

Von der zweiten Geräteeinheit 86 kann die erste Geräteeinheit 85 gelöst werden und auf eine in Figur 12 dargestellte dritte Geräteeinheit 88 aufgesetzt werden. Die dritte Geräteeinheit 88 bildet einen topfförmigen und nach oben offenen Behälter 89 mit an der Unterseite gehaltenen Rollen 90. Die erste Geräteeinheit 85 kann mit der dritten Geräteeinheit 88 druckdicht über die Verbindungselemente 87 verbunden werden, so dass der an der ersten Geräteeinheit 85 verbleibende Restabschnitt des ersten Schmutzsammelbehälters 39 und der Behälter 89 einen gemeinsamen großen Schmutzsammelbehälter 91 ausbilden. Das auf diese Weise gebildete mit dem Bezugszeichen 92 versehene Sauggerät ist ein herkömmliches Sauggerät in Form eines Staubsaugers, welches mittels Rollen 90 auf dem Boden 21 verfahren werden kann.

Das Sauggerät 84 in Kombination mit der dritten Geräteeinheit 88 erweist sich dadurch als sehr flexibel, denn es kann nicht nur zum Absaugen von am Bearbeitungsorgan 23 anfallendem Sauggut 17 abgesaugt werden, sondern findet auch Einsatzmöglichkeiten als herkömmlicher Staubsauger.

## Patentansprüche

1. Sauggerät zum Absaugen eines Bearbeitungsorgans (23) einer Werkzeugmaschine (20), umfassend einen ersten Schmutzsammelbehälter (39) mit einem Saugeinlass (28) für am Bearbeitungsorgan (23) anfallendes Sauggut (17) und mit einer ersten Durchtrittsöffnung (42) für Sauggut (17), sowie ein Saugaggregat (33), um den ersten Schmutzsammelbehälter (39) mit Unterdruck zu beaufschlagen, ein erstes Absperrorgan (46; 73), das von einem Sperrzustand, in dem ein Durchtritt von Sauggut (17) durch die erste Durchtrittsöffnung (42) verhindert wird, in einen Durchlasszustand, in dem Sauggut (17) durch die erste Durchtrittsöffnung (42) hindurch treten kann, und umgekehrt überführbar ist, einen zweiten Schmutzsammelbehälter (40) zur Aufnahme von die erste Durchtrittsöffnung (42) durchtretendem Sauggut (17) mit einem Saugauslass (30), an den eine Absaugleitung (29) einer Absauganlage (10) anschließbar und über den der zweite Schmutzsammelbehälter (40) mit Unterdruck beaufschlagbar ist, und mit einer zweiten Durchtrittsöffnung (43) für Sauggut (17), **gekennzeichnet durch** ein zweites Absperrorgan (49; 81), welches von einem Sperrzustand, in dem ein Durchtritt von Sauggut (17) **durch** die zweite Durchtrittsöffnung (43) verhindert wird, in einen Durchlasszustand, in dem Sauggut (17) **durch** die zweite Durchtrittsöffnung (43) hindurch treten kann, und umgekehrt überführbar ist.

2. Sauggerät nach Anspruch 1, **dadurch gekennzeichnet, dass** die zweite Durchtrittsöffnung (43) am Saugauslass (30) angeordnet oder durch diesen ausgebildet ist.

3. Sauggerät nach Anspruch 1, **dadurch gekennzeichnet, dass** die zweite Durchtrittsöffnung (43) in Abstand zum Saugauslass (30) angeordnet ist und dass über die zweite Durchtrittsöffnung (43) ein erster Raumbereich (61; 69) des zweiten Schmutzsammelbehälters (40) in einen zweiten Raumbereich (62; 70) des zweiten Schmutzsammelbehälters (40) mündet, wobei Sauggut (17) über die erste Durchtrittsöffnung (42) in den ersten Raumbereich (61; 69) eintreten und über den Saugauslass (30) aus dem zweiten Raumbereich (62; 70) austreten kann.

4. Sauggerät nach einem der voranstehenden Ansprüche, **dadurch gekennzeichnet, dass** der zweite Schmutzsammelbehälter (40) einen Einlass (44) für Fremdluft umfasst und dass das Sauggerät (27; 60; 65; 71; 79; 80; 84) ein drittes Absperrorgan (52) aufweist, das von einem Sperrzustand, in dem der Einlass (44) verschlossen ist, in einen Durchlasszustand, in dem der Einlass (44) geöffnet ist, und umgekehrt überführbar ist.

5. Sauggerät nach einem der Ansprüche 1 bis 3, **dadurch gekennzeichnet, dass** der zweite Schmutzsammelbehälter (40) einen Einlass (44) für Fremdluft umfasst, der mittels des den Sperrzustand einnehmenden zweiten Absperrorgans (81) verschlossen wird und geöffnet ist, wenn das zweite Absperrorgan (81) den Durchlasszustand einnimmt.

6. Sauggerät nach einem der voranstehenden Ansprüche, **dadurch gekennzeichnet, dass** mindestens ein Absperrorgan (46, 49, 52; 73; 81) eine Betätigungseinrichtung zum Überführen des Absperrorgans (46, 49, 52; 73; 81) vom Sperrzustand in den Durchlasszustand und/oder umgekehrt aufweist.

7. Sauggerät nach Anspruch 6, **dadurch gekennzeichnet, dass** mindestens eine Betätigungseinrichtung als pneumatischer Antrieb (48, 51, 54) ausgebildet ist.

8. Sauggerät nach Anspruch 6 oder 7, **dadurch gekennzeichnet, dass** mindestens eine Betätigungseinrichtung von einer Steuereinrichtung (58) ansteuerbar ist.

9. Sauggerät nach Anspruch 8, **dadurch gekennzeichnet, dass** das erste Absperrorgan (46; 73) und das zweite Absperrorgan (49; 81) einander abwechselnd jeweils den Sperrzustand und den Durchlasszustand einnehmen unter Anwendung von Steuersignalen, die einer ersten Betätigungseinrichtung des ersten Absperrorgans (46; 73) und einer zweiten Betätigungseinrichtung des zweiten Absperrorgans (49; 81) durch die Steuereinrichtung (58) bereitstellbar sind.

10. Sauggerät nach Anspruch 8 oder 9, **dadurch gekennzeichnet, dass** das erste Absperrorgan (46; 73) und das zweite Absperrorgan (49; 81) nicht gleichzeitig jeweils den Durchlasszustand einnehmen unter Anwendung von Steuersignalen, die der ersten Betätigungseinrichtung des ersten Absperrorgans (46; 73) und der zweiten Betätigungseinrichtung des zweiten Absperrorgans (49; 81) durch die Steuereinrichtung (58) bereitstellbar sind.

11. Sauggerät nach einem der Ansprüche 8 bis 10, **dadurch gekennzeichnet, dass** das zweite Absperrorgan (49) und das dritte Absperrorgan (52) gleichzeitig jeweils den Durchlasszustand einnehmen unter Anwendung von Steuersignalen, die der zweiten Betätigungseinrichtung des zweiten Absperrorgans (49) und einer dritten Betätigungseinrichtung des dritten Absperrorgans (52) durch die Steuereinrichtung (58) bereitstellbar sind.

12. Sauggerät nach einem der Ansprüche 8 bis 11, **dadurch gekennzeichnet, dass** mindestens ein Absperrorgan (46, 49, 52; 73; 81) zeitgesteuert vom Sperrzustand in den Durchlasszustand und/oder umgekehrt überführbar ist unter Anwendung eines Steuersignals, das der Betätigungseinrichtung des Absperrorgans (46, 49, 52; 73; 81) durch die Steuereinrichtung (58) bereitstellbar ist.

13. Sauggerät nach einem der Ansprüche 8 bis 12, **dadurch gekennzeichnet, dass** mindestens ein Absperrorgan (46, 49, 52; 73; 81) in Abhängigkeit von der Menge an Sauggut (17) in einem Schmutzsammelbehälter (39, 40) vom Sperrzustand in den Durchlasszustand und/oder umgekehrt überführbar ist unter Anwendung eines Steuersignals, das der Betätigungseinrichtung des Absperrorgans (46, 49, 52; 73; 81) durch die Steuereinrichtung (58) bereitstellbar ist.

14. Sauggerät nach einem der Ansprüche 8 bis 13, **dadurch gekennzeichnet, dass** das Sauggerät (27; 60; 65; 71; 79; 80; 84) die Steuereinrichtung (58) zum Ansteuern mindestens einer Betätigungseinrichtung umfasst.

15. Sauggerät nach einem der voranstehenden Ansprüche, **dadurch gekennzeichnet, dass** mindestens ein Absperrorgan (46, 49, 52; 81) als Schließeinrichtung ausgebildet ist und ein Schließelement (47, 50, 53; 82) umfasst, mit dem eine Öffnung (42, 43, 45) verschließbar ist.

16. Sauggerät nach Anspruch 15, **dadurch gekennzeichnet, dass** das Schließelement (47, 50, 53; 82) als Klappe (47) oder als Schieber (50, 53; 82) ausgebildet ist.

17. Sauggerät nach einem der voranstehenden Ansprüche, **dadurch gekennzeichnet, dass** das erste Absperrorgan (73) und/oder das zweite Absperrorgan als Fördereinrichtung ausgebildet ist und ein Förderelement (74) umfasst, mit dem Sauggut (17) durch die erste Durchtrittsöffnung (42) bzw. die zweite Durchtrittsöffnung (43) hindurch förderbar ist.

18. Sauggerät nach Anspruch 17, **dadurch gekennzeichnet, dass** das Förderelement (74) als Zellenradschleuse (74) oder als Förderschnecke ausgebildet ist.

19. Sauggerät nach einem der voranstehenden Ansprüche, **dadurch gekennzeichnet, dass** das Sauggerät (84) eine erste Geräteeinheit (85) und eine mit dieser lösbar verbindbare zweite Geräteeinheit (86) aufweist, wobei die erste Geräteeinheit (85) zumindest das Saugaggregat (33) und einen den Saugeinlass (28) aufweisenden Abschnitt des ersten Schmutzsammelbehälters (39) aufweist und wobei die zweite Geräteeinheit (86) zumindest den zweiten Schmutzsammelbehälter (40) und das zweite Absperrorgan (46) aufweist.

20. Absauganlage für mindestens eine Werkzeugmaschine, umfassend mindestens ein Sauggerät (27; 60; 65; 71; 79; 80; 84) nach einem der voranstehenden Ansprüche sowie ein zentrales Saugaggregat (12), einen von diesem mit Unterdruck beaufschlagbaren zentralen Schmutzsammelbehälter (14), der eine Saugöffnung (15) aufweist, sowie mindestens eine Absaugleitung (16, 29), die an die Saugöffnung (15) und an den Saugauslass (30) des mindestens einen Sauggerätes (27; 60; 65; 71; 79; 80; 84) angeschlossen ist.

## Claims

1. Suction apparatus for suctioning off a machining device (23) of a machine tool (20), comprising a first dirt collection container (39) with a suction inlet (28) for suction material (17) occurring at the machining device (23) and with a first through-opening (42) for suction material (17), and comprising a suction unit (33) for subjecting the first dirt collection container (39) to underpressure, a first shut-off device (46; 73) which is transferable from a shut-off state in which passage of suction material (17) is prevented through the first through-opening (42) to a let-through state in which suction material (17) can pass through the first through-opening (42), and vice versa, a second dirt collection container (40) for receiving suction material (17) passing through the first through-opening (42) with a suction outlet (30) to which a suction extraction line (29) of a suction extraction installation (10) is connectable and via which the second dirt collection container (40) can be subjected to underpressure, and with a second through-opening (43) for suction material (17), **characterized by** a second shut-off device (49; 81) which is transferable from a shut-off state in which passage of suction material (17) is prevented through the second through-opening (43) to a let-through state in which suction material (17) can pass through the second through-opening (43), and vice versa.

2. Suction apparatus in accordance with claim 1, **characterized in that** the second through-opening (43) is arranged on or formed by the suction outlet (30).

3. Suction apparatus in accordance with claim 1, **characterized in that** the second through-opening (43) is arranged at a distance from the suction outlet (30), and **in that** a first spatial area (61; 69) of the second dirt collection container (40) opens into a second spatial area (62; 70) of the second dirt collection container (40) via the second through-opening (43), suction material (17) being able to enter the first spatial area (61; 69) via the first through-opening (42) and being able to pass out of the second spatial area (62;70) via the suction outlet (30).

4. Suction apparatus in accordance with any one of the preceding claims, **characterized in that** the second dirt collection container (40) comprises an inlet (44) for external air, and **in that** the suction apparatus (27; 60; 65; 71; 79; 80; 84) comprises a third shut-off device (52) which is transferable from a shut-off state in which the inlet (44) is closed to a let-through state in which the inlet (44) is open, and vice versa.

5. Suction apparatus in accordance with any one of claims 1 to 3, **characterized in that** the second dirt collection container (40) comprises an inlet (44) for external air, which is closed by means of the second shut-off device (81) assuming the shut-off state, and which is open when the second shut-off device (81) assumes the let-through state.

6. Suction apparatus in accordance with any one of the preceding claims, **characterized in that** at least one shut-off device (46, 49, 52; 73; 81) comprises an actuating device for transferring the shut-off device (46, 49, 52; 73; 81) from the shut-off state to the let-through state and/or vice versa.

7. Suction apparatus in accordance with claim 6, **characterized in that** at least one actuating device is configured as a pneumatic drive (48, 51; 54).

8. Suction apparatus in accordance with claim 6 or 7, **characterized in that** at least one actuating device is controllable by a control device (58).

9. Suction apparatus in accordance with claim 8, **characterized in that** the first shut-off device (46; 73) and the second shut-off device (49; 81) respectively assume the shut-off state and the let-through state alternately with each other using control signals which can be made available to a first actuating device of the first shut-off device (46; 73) and to a second actuating device of the second shut-off device (49; 81) by the control device (58).

10. Suction apparatus in accordance with claim 8 or 9, **characterized in that** the first shut-off device (46; 73) and the second shut-off device (49; 81) do not respectively assume the let-through state at the same time using control signals which can be made available to the first actuating device of the first shut-off device (46; 73) and to the second actuating device of the second shut-off device (49; 81) by the control device (58).

11. Suction apparatus in accordance with any one of claims 8 to 10, **characterized in that** the second shut-off device (49) and the third shut-off device (52) respectively assume the let-through state at the same time using control signals which can be made available to the second actuating device of the second shut-off device (49) and to a third actuating device of the third shut-off device (52) by the control device (58).

12. Suction apparatus in accordance with any one of claims 8 to 11, **characterized in that** at least one shut-off device (46, 49, 52; 73; 81) is transferable in a time-controlled manner from the shut-off state to the let-through state and/or vice versa using a control signal which can be made available to the actuating device of the shut-off device (46, 49, 52; 73; 81) by the control device (58).

13. Suction apparatus in accordance with any one of claims 8 to 12, **characterized in that** at least one shut-off device (46, 49, 52; 73; 81) is transferable in dependence upon the amount of suction material (17) in a dirt collection container (39, 40) from the shut-off state to the let-through state and/or vice versa using a control signal which can be made available to the actuating device of the shut-off device (46, 49, 52; 73; 81) by the control device (58).

14. Suction apparatus in accordance with any one of claims 8 to 13, **characterized in that** the suction apparatus (27; 60; 65; 71; 79; 80; 84) comprises the control device (58) for controlling at least one actuating device.

15. Suction apparatus in accordance with any one of the preceding claims, **characterized in that** at least one shut-off device (46, 49, 52; 81) is configured as a closing device and comprises a closing element (47, 50, 53; 82) with which an opening (42, 43, 45) can be closed.

16. Suction apparatus in accordance with claim 15, **characterized in that** the closing element (47, 50, 53; 82) is configured as a flap (47) or as a slide (50, 53; 82).

17. Suction apparatus in accordance with any one of the preceding claims, **characterized in that** the first shut-off device (73) and/or the second shut-off device is configured as a conveying device and comprises a conveying element (74) with which suction material (17) can be conveyed through the first through-opening (42) and the second through-opening (43), respectively.

18. Suction apparatus in accordance with claim 17, **characterized in that** the conveying element (74) is configured as a cellular wheel sluice (74) or as a screw conveyor.

19. Suction apparatus in accordance with any one of the preceding claims, **characterized in that** the suction apparatus (84) comprises a first apparatus unit (85) and a second apparatus unit (86) releasably connectable to the latter, the first apparatus unit (85) comprising at least the suction unit (33) and a section of the first dirt collection container (39) that comprises the suction inlet (28), and the second apparatus unit (86) comprising at least the second dirt collection container (40) and the second shut-off device (46).

20. Suction extraction installation for at least one machine tool, comprising at least one suction apparatus (27; 60; 65; 71; 79; 80; 84) in accordance with any one of the preceding claims and a central suction unit (12), a central dirt collection container (14) which can be subjected to underpressure by the central suction unit (12) and comprises a suction opening (15), and at least one suction extraction line (16, 29) which is connected to the suction opening (15) and to the suction outlet (30) of the at least one suction apparatus (27; 60; 65; 71; 79; 80; 84).

## Revendications

1. Appareil d'aspiration pour l'aspiration d'un organe de traitement (23) d'une machine-outil (20), comprenant un premier contenant de collecte de saletés (39) doté d'une entrée d'aspiration (28) pour le produit aspiré (17) s'accumulant sur l'organe de traitement (23) et d'une première ouverture de passage (42) pour le produit aspiré (17), ainsi qu'un groupe d'aspiration (33) destiné à soumettre le premier contenant de collecte de saletés (39) à une dépression, un premier organe de verrouillage (46 ; 73) pouvant passer d'un état verrouillé, dans lequel le produit aspiré (17) est empêché de passer à travers la première ouverture de passage (42), à un état de passage dans lequel le produit aspiré (17) peut passer à travers la première ouverture de passage (42), et inversement, un second contenant de collecte de saletés (40) destiné à loger le produit aspiré (17) passant à travers la première ouverture de passage (42) et doté d'une sortie d'aspiration (30) à laquelle une conduite d'aspiration (29) d'une installation d'aspiration (10) peut être raccordée et par l'intermédiaire de laquelle le second contenant de collecte de saletés (40) peut être soumis à l'effet d'une dépression, et doté d'une seconde ouverture de passage (43) pour le produit aspiré (17), **caractérisé par** un deuxième organe de verrouillage (49 ; 81) pouvant passer d'un état verrouillé, dans lequel le produit aspiré (17) est empêché de passer à travers la seconde ouverture de passage (43), à un état de passage, dans lequel le produit aspiré (17) peut passer à travers la seconde ouverture de passage (43), et inversement.

2. Appareil d'aspiration selon la revendication 1, **caractérisé en ce que** la seconde ouverture de passage (43) est disposée sur la sortie d'aspiration (30) ou formée par celle-ci.

3. Appareil d'aspiration selon la revendication 1, **caractérisé en ce que** la seconde ouverture de passage (43) est disposée à une certaine distance de la sortie d'aspiration (30) et **en ce qu'**une première zone spatiale (61 ; 69) du second contenant de collecte de saletés (40) débouche dans une seconde zone spatiale (62 ; 70) du second contenant de collecte de saletés (40) en passant par la seconde ouverture de passage (43), le produit aspiré (17) pouvant pénétrer dans la première zone spatiale (61 ; 69) en passant par la première ouverture de passage (42) et pouvant sortir de la seconde zone spatiale (62 ; 70) en passant par la sortie d'aspiration (30).

4. Appareil d'aspiration selon l'une quelconque des revendications précédentes, **caractérisé en ce que** le second contenant de collecte de saletés (40) comprend une entrée (44) pour l'air extérieur et **en ce que** l'appareil d'aspiration (27 ; 60 ; 65 ; 71 ; 79 ; 80 ; 84) comprend un troisième organe de verrouillage (52) pouvant passer d'un état verrouillé, dans lequel l'entrée (44) est fermée, à un état de passage, dans lequel l'entrée (44) est ouverte, et inversement.

5. Appareil d'aspiration selon l'une quelconque des revendications 1 à 3, **caractérisé en ce que** le second contenant de collecte de saletés (40) comprend une entrée (44) pour l'air extérieur, fermée au moyen du deuxième organe de verrouillage (81) occupant l'état verrouillé, et ouverte lorsque le deuxième organe de verrouillage (81) occupe l'état de passage.

6. Appareil d'aspiration selon l'une quelconque des revendications précédentes, **caractérisé en ce qu'**au moins un organe de verrouillage (46, 49, 52 ; 73 ; 81) comprend un dispositif d'actionnement destiné à faire passer l'organe de verrouillage (46, 49, 52 ; 73 ; 81) de l'état verrouillé à l'état de passage et/ou inversement.

7. Appareil d'aspiration selon la revendication 6, **caractérisé en ce qu'**au moins un dispositif d'actionnement est conçu comme un entraînement pneumatique (48, 51, 54).

8. Appareil d'aspiration selon la revendication 6 ou 7, **caractérisé en ce qu'**au moins un dispositif d'actionnement peut être commandé par un dispositif de commande (58).

9. Appareil d'aspiration selon la revendication 8, **caractérisé en ce que** le premier organe de verrouillage (46 ; 73) et le deuxième organe de verrouillage (49 ; 81) occupent à tour de rôle respectivement l'état verrouillé et l'état de passage au moyen de signaux de commande pouvant être fournis à un premier dispositif d'actionnement du premier organe de verrouillage (46 ; 73) et à un deuxième dispositif d'actionnement du deuxième organe de verrouillage (49 ; 81) par le dispositif de commande (58).

10. Appareil d'aspiration selon la revendication 8 ou 9, **caractérisé en ce que** le premier organe de verrouillage (46 ; 73) et le deuxième organe de verrouillage (49 ; 81) n'occupent pas simultanément respectivement l'état de passage au moyen de signaux de commande pouvant être fournis au premier dispositif d'actionnement du premier organe de verrouillage (46 ; 73) et au deuxième dispositif d'actionnement du deuxième organe de verrouillage (49 ; 81) par le dispositif de commande (58).

11. Appareil d'aspiration selon l'une quelconque des revendications 8 à 10, **caractérisé en ce que** le deuxième organe de verrouillage (49) et le troisième organe de verrouillage (52) occupent simultanément respectivement l'état de passage au moyen de signaux de commande pouvant être fournis au deuxième dispositif d'actionnement du deuxième organe de verrouillage (49) et à un troisième dispositif d'actionnement du troisième organe de verrouillage (52) par le dispositif de commande (58).

12. Appareil d'aspiration selon l'une quelconque des revendications 8 à 11, **caractérisé en ce qu'**au moins un organe de verrouillage (46, 49, 52 ; 73 ; 81) peut passer de manière temporisée de l'état verrouillé à l'état de passage et/ou inversement au moyen d'un signal de commande pouvant être fourni au dispositif d'actionnement de l'organe de verrouillage (46, 49, 52 ; 73 ; 81) par le dispositif de commande (58).

13. Appareil d'aspiration selon l'une quelconque des revendications 8 à 12, **caractérisé en ce qu'**au moins un organe de verrouillage (46, 49, 52 ; 73 ; 81), en fonction de la quantité de produit aspiré (17) dans un contenant de collecte de saletés (39, 40), peut passer de l'état verrouillé à l'état de passage et/ou inversement au moyen d'un signal de commande pouvant être fourni au dispositif d'actionnement de l'organe de verrouillage (46, 49, 52 ; 73, 81) par le dispositif de commande (58).

14. Appareil d'aspiration selon l'une quelconque des revendications 8 à 13, **caractérisé en ce que** l'appareil d'aspiration (27 ; 60 ; 65 ; 71 ; 79 ; 80 ; 84) comprend le dispositif de commande (58) destiné à commander au moins un dispositif d'actionnement.

15. Appareil d'aspiration selon l'une quelconque des revendications précédentes, **caractérisé en ce qu'**au moins un organe de verrouillage (46, 49, 52 ; 81) est conçu comme un dispositif de fermeture et comprend un élément de fermeture (47, 50, 53 ; 82) permettant de fermer une ouverture (42, 43, 45).

16. Appareil d'aspiration selon la revendication 15, **caractérisé en ce que** l'élément de fermeture (47, 50, 53 ; 82) est conçu comme un clapet (47) ou comme un tiroir (50, 53 ; 82).

17. Appareil d'aspiration selon l'une quelconque des revendications précédentes, **caractérisé en ce que** le premier organe de verrouillage (73) et/ou le deuxième organe de verrouillage est conçu comme un dispositif de transport et comprend un élément de transport (74) permettant de transporter le produit aspiré (17) à travers la première ouverture de passage (42) ou la seconde ouverture de passage (43).

18. Appareil d'aspiration selon la revendication 17, **caractérisé en ce que** l'élément de transport (74) est conçu comme un sas rotatif à cellules (74) ou comme un transporteur à vis sans fin.

19. Appareil d'aspiration selon l'une quelconque des revendications précédentes, **caractérisé en ce que** l'appareil d'aspiration (84) comprend une première unité d'appareil (85) et une seconde unité d'appareil (86) pouvant être raccordée de manière détachable à celle-ci, la première unité d'appareil (85) comprenant au moins le groupe d'aspiration (33) et une partie du premier contenant de collecte de saletés (39) comprenant l'entrée d'aspiration (28) et la seconde unité d'appareil (86) comprenant au moins le second contenant de collecte de saletés (40) et le deuxième organe de verrouillage (46).

20. Installation d'aspiration pour au moins une machine-outil, comprenant au moins un appareil d'aspiration (27 ; 60 ; 65 ; 71 ; 79 ; 80 ; 84) selon l'une quelconque des revendications précédentes ainsi qu'un groupe d'aspiration central (12), un contenant de collecte de saletés central (14) pouvant être soumis à l'effet d'une dépression par celui-ci et comprenant une ouverture d'aspiration (15), ainsi qu'au moins une conduite d'aspiration (16, 29) raccordée à l'ouverture d'aspiration (15) et à la sortie d'aspiration (30) de l'au moins un appareil d'aspiration (27 ; 60 ; 65 ; 71 ; 79 ; 80 ; 84).
